# EUROPÄISCHE PATENTANMELDUNG

(11) **EP 1 279 630 A1**
(43) Veröffentlichungstag der Anmeldung: **29.01.2003**
(21) Anmeldenummer: 02015966.1
(22) Anmeldetag: 18.07.2002
(51) Int. Cl.: B65G 47/61, B65G 19/02

(54) **Verfahren und Vorrichtung zur übergabe von Transportbügeln für Wäschestücke**

(30) Priorität: 23.07.2001 DE 10134941; 20.03.2002 DE 20204387 U
(71) Anmelder: KD Kleindienst Wäschereitechnik GmbH, 86199 Augsburg (DE)
(72) Erfinder: Schied, Hans, 86179 Augsburg (DE)
(74) Vertreter: Ernicke, Klaus Stefan

(57) **Zusammenfassung**

Die Erfindung betrifft ein Verfahren und eine Vorrichtung zur Übergabe von Transportbügeln (2) für Wäschestücke (23) von einer Zuführung (3) an mehrere Förderabschnitte (9) eines schienenartigen Förderers (5), welche zwischen mehreren im Abstand angeordneten Mitnehmern (7) gebildet werden. Am Ende der Zuführung (3) ist ein beweglicher Übergabefinger (10) angeordnet, der mit einer räumlichen Neigung schräg von oben und von der Seite her zum Förderer (5) gerichtet ist und mit seiner Fingerspitze (12) ausweichfähig in die Bewegungsbahn (8) der Mitnehmer ragt. Der Übergabefinger (10) ist mit einem Schwenklager (11) schwenkbar an der Zuführung (3) gelagert und kann dadurch den Mitnehmern (7) elastisch ausweichen und anschließend wieder in die Übergabeposition am Förderer (5) zurückkehren.

## Beschreibung

Die Erfindung betrifft ein Verfahren und eine Vorrichtung zur Übergabe von Transportbügeln für Wäschestücke mit den Merkmalen im Oberbegriff des Vorrichtungshauptanspruchs.

Aus der Praxis sind Übergabevorrichtungen bekannt, mit denen Transportbügel mit aufgehängten Wäschestücken von einer Zuführung an einen schienenartigen Förderer übergeben werden, der mehrere im Abstand angeordnete bewegte Mitnehmer aufweist. Zwischen den Mitnehmern werden Förderabschnitte gebildet, in die der Transportbügel eingehängt werden soll. Bei der bekannten Übergabevorrichtung wird die Zuführung in einer Kurve über den Förderer geführt. Am Ende der Zuführkurve sitzt eine ein- oder zweiarmige Schiene, die sich längs des Förderers erstreckt und schräg nach unten gerichtet ist. An dieser Schiene rutschen die Bügel nach unten und sollen in die Förderabschnitte gleiten. Hierbei gibt es verschiedene Probleme.

Zum einen erfordert diese Übergabevorrichtung Transportbügel mit einem sehr langen Hals, um ein kollisionsfreies Einschwenken der Transportbügel im Bereich der Zuführkurve und deren konstruktionsbedingter großer Höhe über den Förderer zu ermöglichen. Die seitlich ausladenden Bügelarme müssen beim Einschwenken unter den Förderer gelangen, während sich der Bügelhaken auf der Zuführung mit Abstand oberhalb des Förderers befindet. Dies schränkt den Einsatzbereich der Übergabevorrichtung und des gesamten damit zusammenhängenden Fördersystems wesentlich ein, weil Transportbügel mit kürzeren Hälsen oder sogenannte Adapterbügel nicht eingesetzt werden können.

Aus dem gleichen Grund ist auch der Neigungs- oder Gleitwinkel der Zuführkurve und der Übergabenschiene(n) beschränkt, wodurch die Transportbügel bei ungünstigen Reibverhältnissen hängen bleiben können. Hierbei wirkt sich auch die relativ große Zuführ- und Gleitlänge der Zuführkurve und der Schiene(n) ungünstig aus, weil sie den Neigungs- oder Gleitwinkel zusätzlich beschränken.

Außerdem besteht das Problem, dass eine einarmige Zuführschiene Schwierigkeiten mit der stabilen Führung der Einhängehaken der Transportbügel macht. Auf einer schmalen Schienen können sich die Bügel nämlich während der Bewegung schräg stellen und auch hin- und herschwingen, was zu Funktionsstörungen führt.

Es ist Aufgabe der vorliegenden Erfindung, eine verbesserte Übergabetechnik aufzuzeigen.

Die Erfindung löst diese Aufgabe mit den Merkmalen im Verfahrens- und Vorrichtungshauptanspruch.
Die erfindungsgemäße Übergabetechnik hat den Vorteil, dass die Transportbügel mit größerer Betriebssicherheit als beim Stand der Technik zugeführt und zielgenau in die zwischen den Mitnehmern gebildeten Förderabschnitte auf den schienenartigen Förderer übergeben werden können. Hierbei werden auch unerwünschte Schrägstellungen oder Schwingbewegungen des Transportbügels und des aufgehängten Wäschestücks weitgehend vermieden. Selbst wenn sie aber vorkommen, haben sie keinen negativen Einfluss auf die Übergabe. Ferner gestattet die erfindungsgemäße Übergabetechnik nun auch den unbeschränkten Einsatz unterschiedlichster Formen und Größen von Transportbügeln. Die Bügel können einen deutlich kürzeren Hals als beim Stand der Technik haben und lassen sich trotzdem sicher zuführen und übergeben.

Zudem können steilere Neigungs- und Aufgleitwinkel als bisher in Verbindung mit einer größeren Übergabesicherheit realisiert werden.

Die Übergabevorrichtung erfordert wenig Bau- und Konstruktionsaufwand. Sie braucht auch keine zusätzlichen Antriebe oder Steuerungen, weil der Übergabefinger durch sein Eigengewicht bzw. auch durch den aufliegenden Transportbügel nebst Wäschestück selbsttätig in die Übergabeposition bewegt wird. Fehlstellungen sind dadurch ausgeschlossen. Andererseits kann der Übergabefinger den bewegten Mitnehmern ausweichen und kehrt danach wieder selbsttätig in die Übergabeposition zurück.

Die Formgebung des Übergabefingers hat Vorteile hinsichtlich der sicheren und schwingungsarmen Führung der aufliegenden Transportbügel. Eine gebogene und ggf. auch verjüngte Fingerspitze hat besondere Vorteile für die Übergabesicherheit. Hierbei ist insbesondere auch die Anschrägung auf der Fingeroberseite vorteilhaft. Für die sichere Führung des Bügels bei der Übergabe sind nebeneinander längs laufende Führungskanten vorteilhaft.

Weitere vorteilhafte Ausgestaltungen sind in den Unteransprüchen angegeben.

Die Erfindung ist in den Zeichnungen beispielsweise und schematisch dargestellt. Im Einzelnen zeigen:
- Figur 1:: eine abgebrochene Draufsicht auf einen Förderer mit Zuführung und Übergabevorrichtung nebst Übergabefinger,
- Figur 2:: eine Seitenansicht der Anordnung gemäß Pfeil II von Figur 1,
- Figur 3:: eine Stirnansicht der Anordnung gemäß Pfeil III von Figur 1,
- Figur 4 bis 6:: eine Seitenansicht, eine geklappte Draufsicht und eine Stirnansicht des Übergabefingers,
- Figur 7 und 8:: eine Variante des Übergabefingers in in einachsig gebogener Form in Draufsicht und geklappter Seitenansicht,
- Figur 9:: eine abgebrochene Draufsicht auf den Förderer mit der Variante des Übergabefingers von Figur 7 und 8,
- Figur 10:: eine Seitenansicht der Anordnung gemäß Pfeil IX von Figur 9,
- Figur 11:: eine Variante der Seitenansicht von Figur 10 mit einem anderen mehrachsig gebogenen Übergabefinger und
- Figur 12 und 13:: Varianten der Querschnittsform des Übergabefingers.

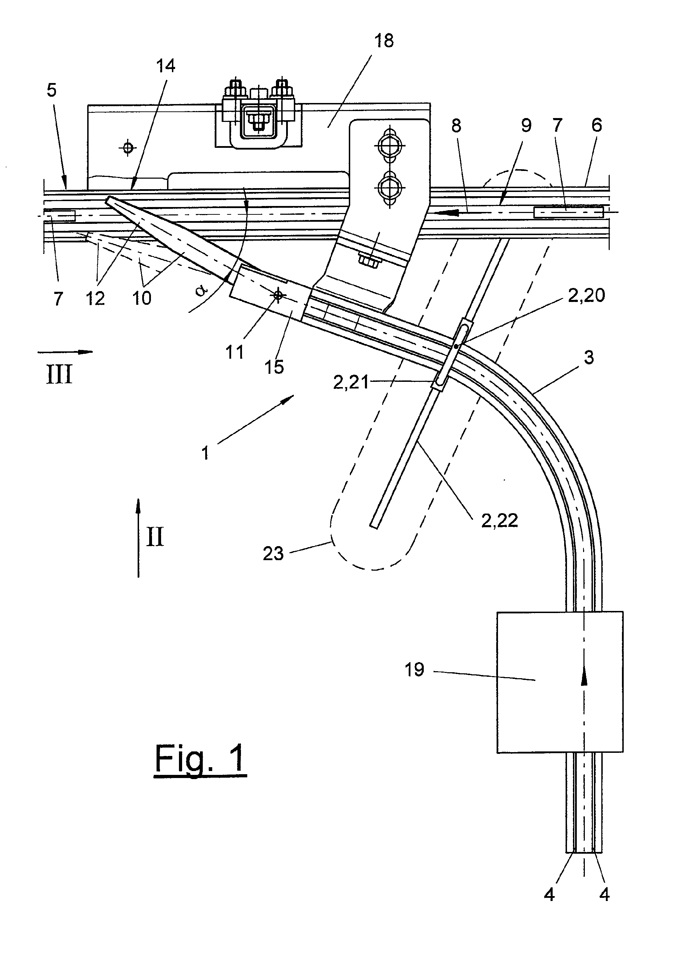

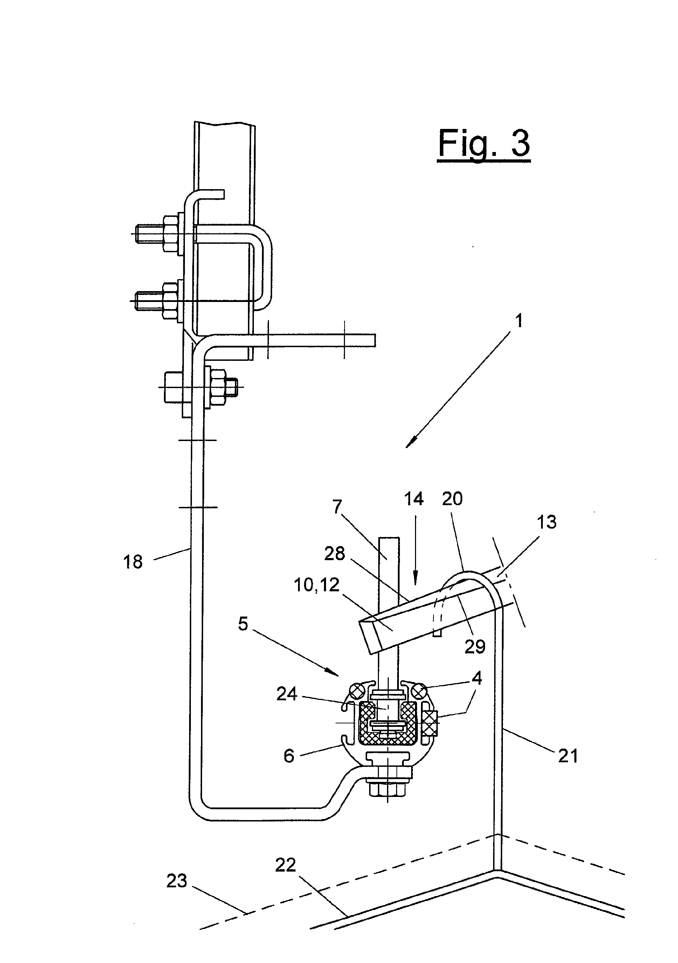

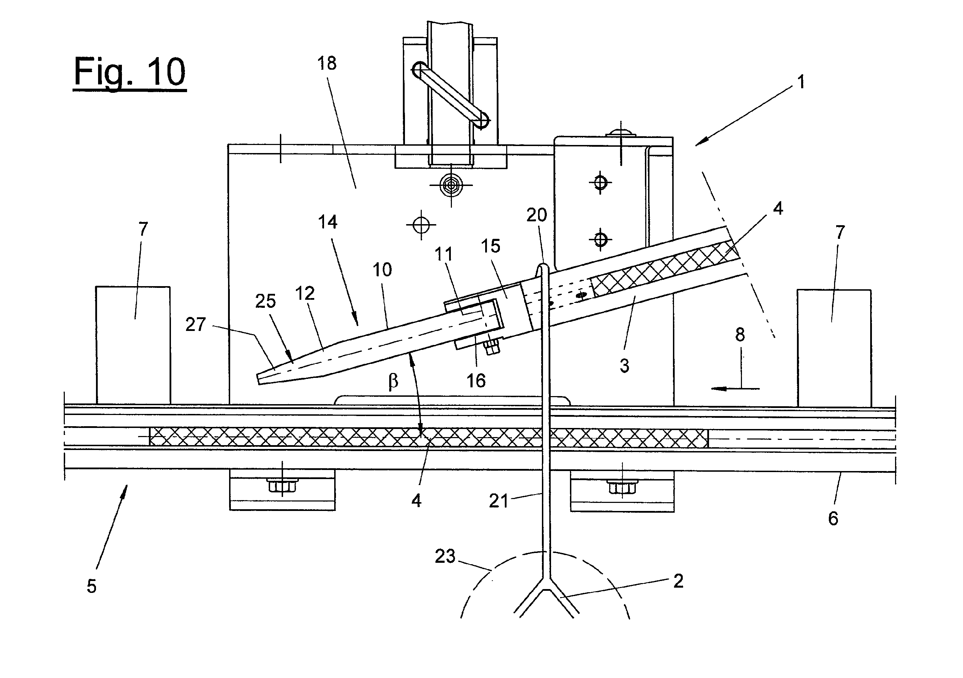

In Figur 1 bis 3 und 9 bis 11 ist eine Fördereinrichtung ausschnittsweise dargestellt, die aus einem Förderer (5), einer Zuführung (3) und einer Übergabevorrichtung (1) zum Transport und zur Übergabe von Transportbügeln (2) mit aufgehängten Wäschestücken (23) besteht.

Der Förderer (5) ist zumindest im Bereich der Übergabevorrichtung (1) schienenartig ausgebildet und besteht aus einer in diesem Bereich vorzugsweise geraden Förderschiene (6) zum gleitenden Transport von aufgehängten Transportbügeln (2). Die Transportbügel (2) hängen mit ihren Bügelhaken (20) auf der Förderschiene (6) und werden auf dieser mit Hilfe von bewegten Mitnehmern (7) in der Förderschiene (6) voran geschleppt. Die Förderschiene (6) ist als hohle Profilschiene mit einem längslaufenden Schlitz an der Oberseite ausgebildet. Im Inneren der Förderschiene (6) läuft ein angetriebenes Transportmittel (24), z.B. eine Förderkette, mit der die einzelnen Mitnehmer (7) verbunden sind.

Die Mitnehmer (7) sind axial in Abstand zueinander angeordnet und bilden zwischen sich Förderabschnitte (9) auf der Förderschiene (6), in denen sich vorzugsweise jeweils nur ein Transportbügel (2) befindet. Die Mitnehmer (7) ragen von der Förderkette (24) aus durch den Schlitz in der Förderschiene (6) nach außen und stehen nach oben ein Stück über die Schienenoberkante vor. Die Mitnehmer (7) haben z.B. eine führungsgünstige Stift- oder Quaderform. Sie werden in Richtung der Förderachse (8) bzw. der sogenannten Bewegungsbahn vorzugsweise kontinuierlich bewegt.

Der Förderer (5) kann Bestandteil eines übergeordneten Fördersystems sein und seinerseits an andere Arten von Fördereinrichtungen angeschlossen sein. Er ist zumindest im Bereich der Übergabevorrichtung (1) in der vorbeschriebenen Weise schienenartig gestaltet und kann ansonsten außerhalb dieses Bereichs eine andere konstruktive Ausbildung haben.

Die Zuführung (3) ist ebenfalls vorzugsweise schienenförmig gestaltet. Sie ist als Gefällestrecke ausgebildet, die von oben und schräg von der Seite her bzw. im Bogen an den Förderer (5) herangeführt ist. An der abwärts geneigten Zuführung (3) rutschen die Transportbügel (2) mit den Wäschestücken (23) durch ihr Eigengewicht entlang.

Hierzu ist die Zuführung (3) ebenfalls als Profilschiene mit einem prismatischen Querschnitt ausgebildet und besitzt an ihrer Oberseite randseitig zwei parallele Gleitleisten (4), auf denen die Bügelhaken (20) aufliegen und dort geführt werden. Die Gleitleisten (4) bestehen aus einem reibungsarmen Material, z.B. einem geeigneten Kunststoff-Schlauch und bilden eine distanzierte doppelte Linienführung für die Bügelhaken (20). In Abwandlung der gezeigten Ausführungsform kann auch nur eine Gleitleiste (4) vorhanden sein. Generell kann die Gleitanordnung auf der Zuführung (3) aber auch in jeder beliebigen anderen geeigneten Weise konstruktiv gestaltet sein.

Die Übergabevorrichtung (1) besteht aus einem Übergabefinger (10) und einem Lagerkopf (15), die mit dem vorderen Ende der Zuführung (3) verbunden sind, z.B. über einen rückwärtigen Schaft am Lagerkopf (15), der in die Zuführschiene gesteckt und dort angeschraubt wird. Die Zuführung (3) und der Förderer (5) sind ihrerseits über ein Gestell (18) miteinander verbunden und in der richtigen Lage zueinander positioniert.

Der Übergabefinger (10) ist mit einer räumlichen Neigung schräg von oben und von der Seite zum Förderer (5) bzw. zur Förderschiene (6) gerichtet und ragt in der in Figur 1 und 9 bis 11 gezeigten Übergabeposition (14) mit seiner Fingerspitze (12) ausweichfähig in die Bewegungsbahn (8) der Mitnehmer (7). Die rückwärtig anschließende Zuführung (3) hat dabei vorzugsweise zumindest im Anschlussbereich die gleiche fluchtende Neigung und Ausrichtung wie der Übergabefinger (10).

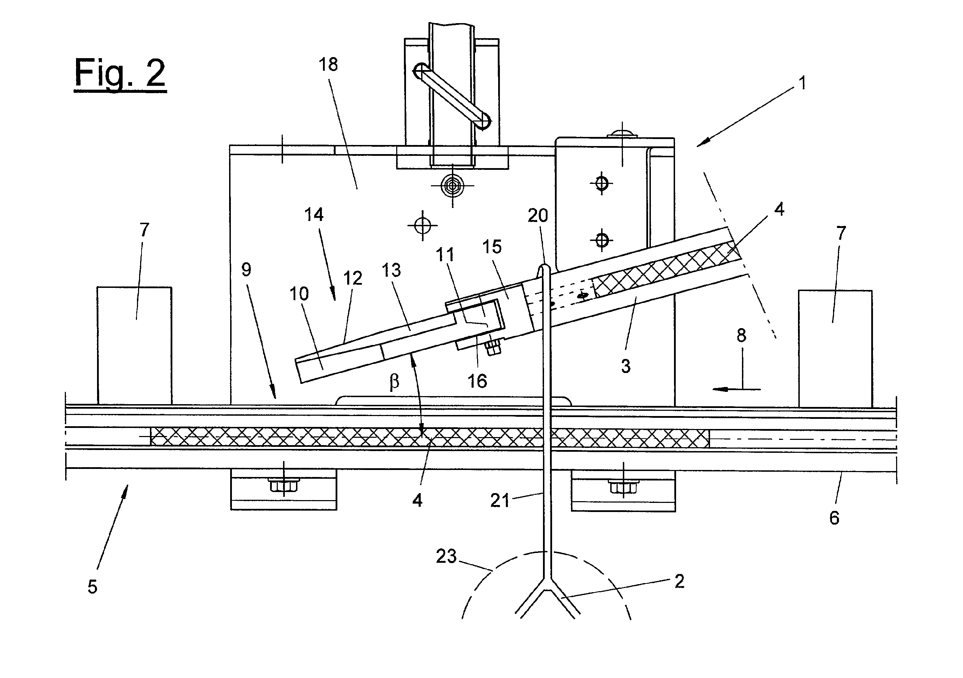

Der Übergabefinger (10) hat im Ausführungsbeispiel von Figur 1 eine im wesentlichen gerade Erstreckungsform und ist im spitzen Winkel zur Bewegungsbahn (8) angeordnet. Er kann von den anlaufenden Mitnehmern (7) ausgelenkt und zur Seite gedrückt werden. Figur 1 zeigt diese Auslenkstellung in gestrichelter und abgebrochener Darstellung. Der Übergabefinger (10) hat in der Übergabeposition (14) vorzugsweise einen seitlichen Anstellwinkel α von ca. 10° bis 35°, vorzugsweise 30° und einen Fallwinkel β (siehe Figur 2) von ca. 5° bis 25°, vorzugsweise 15° zum Förderer (5) bzw. seiner Förderachse (8).

Wie Figur 1 verdeutlicht, befindet sich die Fingerspitze (12) in der Übergabeposition (14) etwa in der Mitte des Förderers (5) bzw. der Förderschiene (6) oder ragt ein klein wenig darüber hinaus. Die Fingerspitze (12) ist in dieser Position außerdem mit einem geringen Abstand über den Förderer (5) bzw. der Förderschiene (6) angeordnet, welcher kleiner ist als die freie und über die Schienenoberkante hinausragende Höhe der Mitnehmer (7). Hierdurch schlagen die bewegten Mitnehmer (7) sicher am Übergabefinger (10) an und können diesen auslenken. In der Übergabeposition (14) können die Transportbügel (2) von der Zuführung (3) über den Übergabefinger (10) hinwegrutschen und auf die Förderschiene (6) im Bereich der Förderabschnitte (9) zwischen den Mitnehmern (7) aufgleiten.

Um den Mitnehmern (7) ausweichen zu können, ist der Übergabefinger (10) in geeigneter Weise beweglich an der Zuführung (3) angeordnet. In der bevorzugten Ausführungsform ist er mit einem Drehlager (11) schwenkbar am Lagerkopf (15) gelagert, der seinerseits am Ende der Zuführschiene (3) montiert ist. Das Drehlager (11) hat eine aufrechte Achse, die schräg zum Förderer (5) ausgerichtet ist. Die Schräglage ist so gewählt, dass der Übergabefinger (10) selbsttätig durch sein Eigengewicht in die Übergabeposition (14) kippen kann. Die Drehachse des Drehlagers (11) steht vorzugsweise senkrecht auf der Längsachse des in Übergabeposition (14) befindlichen geneigten Übergabefingers (10) und ist zur Erzielung der Fingerkipplage zusätzlich um diese Längsachse in Richtung zum Förderer (5) gedreht. Die Drehachse (11) hat dadurch eine Neigungskomponente quer zur Förderachse (8) und eine Neigungskomponente längs der Förderachse (8).

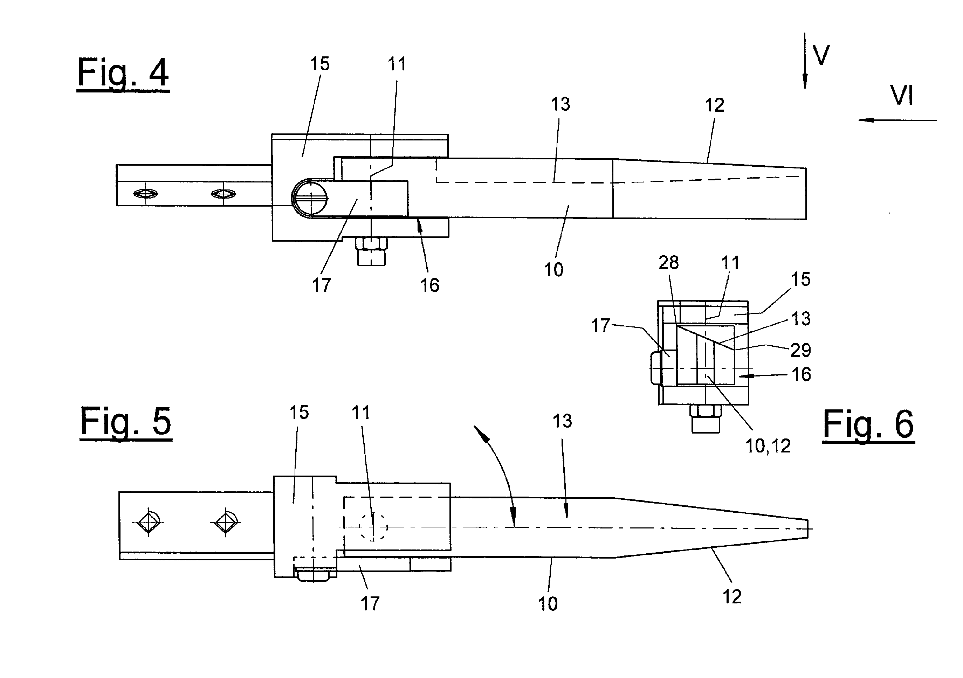

Der Übergabefinger (10) hat im Ausführungsbeispiel von Figur 1 bis 6 eine längliche stiftartige und im wesentlichen gerade Form und besitzt am Ende eine an der Oberseite und den beiden Seitenflächen konisch verjüngte Fingerspitze (12). Der Übergabefinger (10) hat hierbei vorzugsweise einen prismatischen Querschnitt und besitzt an der Oberseite eine Anschrägung (13) in Form einer geneigten ebenen Fläche. Die Anschrägung (13) hat vorzugsweise eine dem Drehlager (11) entgegengesetzte Neigung und ist so ausgerichtet, dass sich ein möglichst günstiger gleitender Übergang für die Bügelhaken (20) von der Anschrägung (13) auf die Oberseite der Förderschiene (6) ergibt.

Der Übergabefinger (10) hat an der Oberseite vorzugsweise zwei mit Abstand nebeneinander liegende und längs laufende Führungskanten (28,29) zur Aufnahme und sicheren Führung des Bügelhakens (20), vorzugsweise in Verlängerung der Gleitleisten (4). In der gezeigten Ausführungsform werden die beiden Führungskanten (28,29) von den seitlichen Rändern der Anschrägung (13) gebildet. Sie können alternativ auch als separate Führungsleisten auf der Oberseite oder der Anschrägung (13) angebracht oder in einer sonstigen geeigneten Weise und Zahl ausgebildet und am Übergabefinger (10) angeordnet sein.

Die Führungs- oder Randkanten (28,29) verlaufen im wesentlichen parallel, d.h. im z.B. rückwärtigen Fingerbereich ziemlich genau parallel und im Fingerspitzenbereich leicht konisch. Sie können sich räumlich im Wesentlichen in gleicher Höhe erstrecken, wobei die Anschrägung (13) in Querrichtung zur Fingerlängsachse eine im wesentlichen horizontale Ausrichtung hat. Hierdurch wird die Neigung des Drehlagers (11) ausgeglichen und der Bügelhals (20) im wesentlichen zentral und mit gerader Ausrichtung geführt. Alternativ kann die dem Förderer (5) benachbarte Kante (28) höher als die andere Kante (29) liegen, so dass sich eine Art Kurvenüberhöhung für die Führung des Bügelhakens (20) in der Übergabekurve ergibt.

Am rückwärtigen Ende ist der Übergabefinger (10) in einem schrägen Aufnahmeschlitz (16) des Lagerkopfes (15) angeordnet und kann sich im Aufnahmeschlitz (16) um sein Drehlager (11) begrenzt hin- und herdrehen. Die Achse des Drehlagers (11) und der geneigte Aufnahmeschlitz (16) sind im rechten Winkel zueinander ausgerichtet. An der zum Förderer (5) weisenden Seite ist der Aufnahmeschlitz (16) durch einen Anschlag (17) verschlossen, welcher die Drehbewegung des Übergabefingers (10) in Richtung zum Förderer (5) beschränkt und dessen Winkellage bzw. Streckstellung in der Übergabeposition (14) definiert.

Der Lagerkopf (15) hat ansonsten eine zylindrische oder ovale Form und schließt mit seiner gewölbten Oberseite bündig an die Oberseite der Zuführschiene (3) bzw. die dortigen Gleitleisten (4) an. Am Übergang vom Lagerkopf (15) zur Oberseite des Übergabefingers (10) bzw. zur Anschrägung (13) kann eine kleine Stufe vorhanden sein. Ggf. hat der Übergabefinger (10) auch am hinteren Ende eine kleine Verdickung zur Führung im Aufnahmeschlitz (16).

Der Übergabefinger (10) besteht aus einem gleitgünstigen und reibungsarmen Material, z.B. einem geeigneten Kunststoff. Er kann ansonsten auch aus jedem beliebigen anderen Material bestehen. Die Förderschiene (6) und die Zuführschiene (3) bestehen aus einem geeigneten metallischen Werkstoff, z.B. einem Leichtmetall, insbesondere einer Aluminiumlegierung. Die Schienen (3,6) sind dabei als Profile ausgeformt, die sich durch Strangpressen oder dergleichen herstellen lassen.

Die Förderschiene (6) kann zumindest im Bereich der Übergabevorrichtung (1) an der zur Zuführung (3) weisenden Seitenwand eine eingelegte Gleitleiste (4) haben. Eine solche Gleitleiste (4) kann auch an der Zuführschiene (3) vorhanden sein. Die Gleitleisten (4) dienen der reibungsarmen Führung des anliegenden Bügelhalses (21). Die Förderschiene (6) kann ferner an der Oberseite auch ein oder mehrere Gleitleisten (4) ähnlich wie diejenigen der Zuführschiene (3) aufweisen. Hierfür haben die Profilschienen (3,6) entsprechend angeformte Nuten zur Aufnahme der Gleitleisten (4).

An der Zuführung (3) kann an geeigneter Stelle eine Vereinzelungsvorrichtung (19) für die Transportbügel (2) angeordnet sein, die an den Fördertakt der Mitnehmer (7) angepasst ist. Die Vereinzelungsvorrichtung (19) wird dabei so gesteuert, dass sie den zur Übergabe vorgesehenen Transportbügel (2) jeweils so rechtzeitig freigibt, dass er über die schräg abwärts geneigte Zuführung (3) und den Übergabefinger (10) in einen Förderabschnitt (9) zwischen den Mitnehmern (7) an die Förderschiene (6) übergeben wird.

Durch die schräge Anstellung des Übergabefingers (10) an die Förderschiene (6) kann die Zuführung und die Übergabe eines Transportbügels (2) von der Seite her und mit einem relativ flachen Fallwinkel erfolgen. Der Transportbügel (2) kann hierdurch auch bei einem kurzen Bügelhals (21) mit seinen Bügelarmen (22) und dem dort aufgehängten Wäschestück (23) nicht an den Förderer (5) oder ein anderes Hindernis anstoßen und hat genügend Bewegungsfreiheit bei der Zuführung und Übergabe.

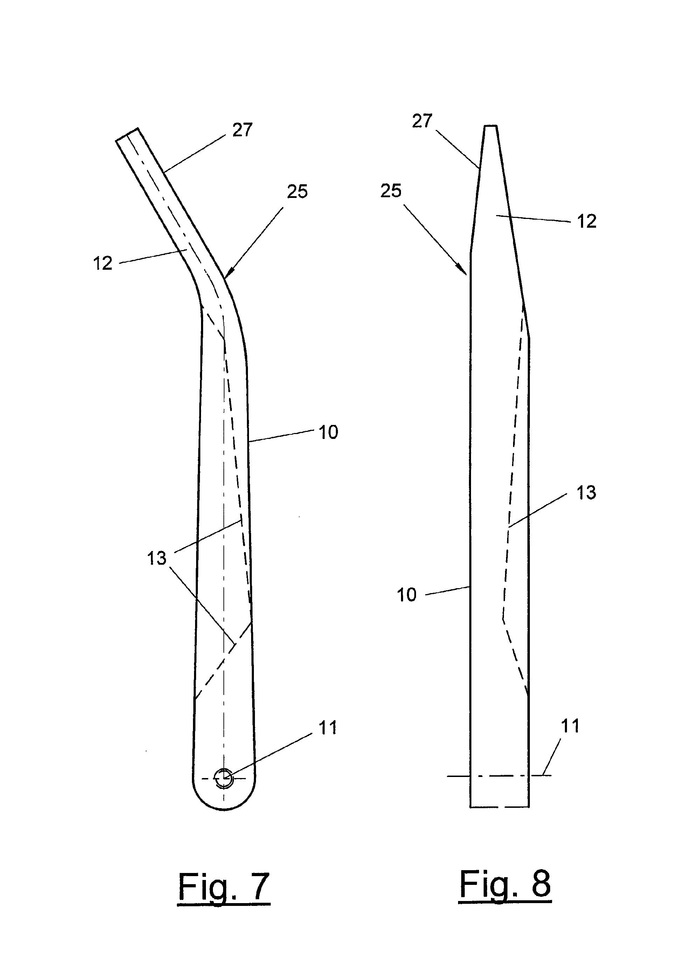

In Figur 7 bis 13 sind Varianten des Übergabefingers (10) und ihr Einsatz an der Übergabevorrichtung (1) dargestellt.

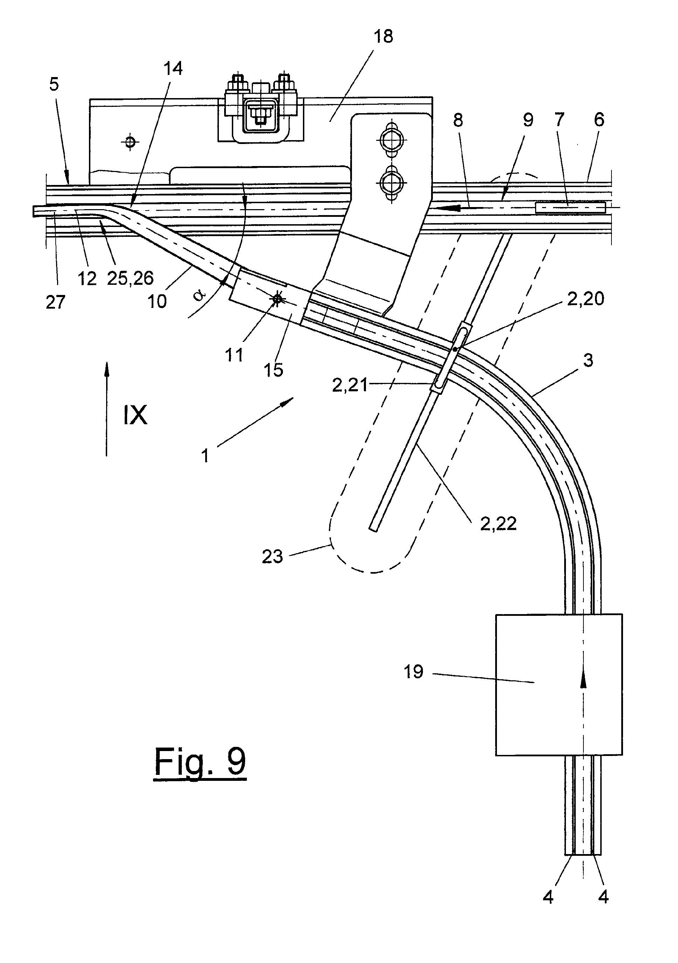

Figur 7 und 8 zeigen die eine Ausführungsform des Übergabefingers (10) in Draufsicht und geklappter Seitenansicht. Der Übergabefinger (10) hat einen vom rückwärtigen Drehlager (11) aus sich im Wesentlichen gerade erstreckenden vorderen Abschnitt, der im Bereich der Fingerspitze (12) mittels einer einachsigen Krümmung (25) in einen anschließenden und im Wesentlichen geraden Endabschnitt (27) übergeht. Wie die zugehörige Figur 9 verdeutlicht, weist die Krümmung (25) in Bewegungsrichtung (8) der Mitnehmer (7). Der Ort und der Winkel der Krümmung (25) sind so auf das Drehlager (11) abgestimmt, dass der Endabschnitt (27) sich in der Übergabeposition (14) im Wesentlichen mittig an der Förderachse (8) befindet und mit etwas Abstand oberhalb der Förderschiene (6) endet. Durch die in Bewegungsrichtung weisende Krümmung (25) kann der Übergabefinger (10) nach wie vor den ankommenden Mitnehmern (7) ausweichen und kehrt dann wie im vorbeschriebenen Ausführungsbeispiel durch seine schräge Anordnung selbsttätig wieder in die gezeigte Übergabeposition (14) zurück. Der gekrümmte Übergabefinger (10) kann im Wesentlichen die gleiche Ausrichtung mit den Winkeln α und β wie der vorbeschriebene gerade Übergabefinger (10) im ersten Ausführungsbeispiel haben.

Durch die Krümmung (25) und die vorzugsweise mittige Längsausrichtung des Endabschnitts (27) zur Bewegungsrichtung (8) können die Transportbügel (2) noch besser an die Förderschiene (6) und die Förderabschnitte (9) übergeben werden. Mittels der Krümmung (25) werden die Bügelhaken (20) hierbei auch gleich in die Bewegungsrichtung (8) der Mitnehmer (7) gedreht. Insgesamt erhöht sich hierbei auch die Übergabesicherheit.

Der gekrümmte Übergabefinger (10) hat ebenfalls vorzugsweise einen prismatischen Querschnitt und vorzugsweise an der Oberseite und an der in Bewegungsrichtung (8) hinteren Seite eine Anschrägung (13), die in Verbindung mit der schrägen Lage des Übergabefingers (10) die Bügelführung verbessert. Die Anschrägung (13) endet hierbei vorzugsweise im Bereich der Krümmung (25) und vor dem Endabschnitt (27). Die Fingerspitze (12) und insbesondere der Endabschnitt (27) sind wie im vorbeschriebenen ersten Ausführungsbeispiel an ein oder mehreren Seiten verjüngt. Hierbei bestehen die Verjüngungen vor allem an der Ober- und Unterseite. An der Oberseite beginnt der schräg abfallende und die Verjüngung bildende Wandabschnitt im Bereich der Krümmung (25) oder ggf. auch ein Stückchen davor. An der Unterseite des Endabschnitts (27) ist die dortige Wandabschrägung kürzer als an der Oberseite und beginnt erst nach der Krümmung (25). In Verbindung mit der Abschrägung (13) und der Schräglage des Übergabefingers (10) ergibt sich hierdurch in der Übergabeposition (14) eine führungsgünstige Oberfläche des Übergabefingers (10) für die Bügelhaken (20).

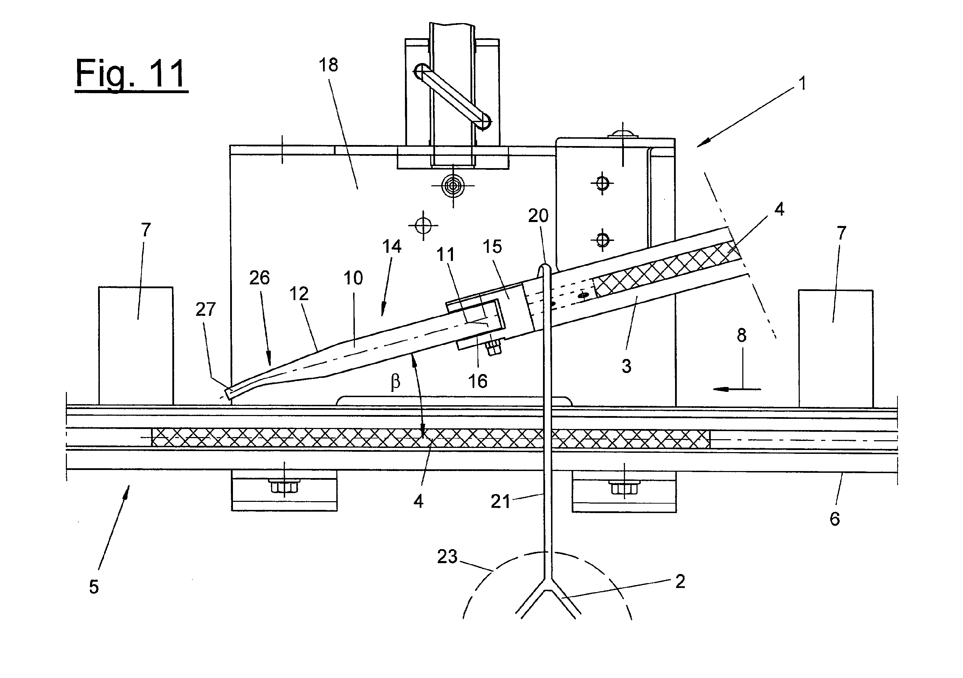

Figur 11 zeigt eine weitere Variante des Übergabefingers (10), wobei dieser im Fingerspitzenbereich eine mehrachsige Krümmung (26) aufweist. Der einachsig gekrümmte Übergabefinger (10) von Figur 7 und 8 hat eine Krümmung (25) mit einer Krümmungsachse, die sich im Wesentlichen parallel zur Lagerachse (11) erstreckt. Hierdurch hat der Übergabefinger (10) in der Seitenansicht von Figur 8 einen im Wesentlichen langgestreckte und gerade Form. Bei der mehrachsigen Krümmung (26) kann eine zusätzliche Krümmung um eine Querachse erfolgen, mit der sich z.B. die Winkellage des Endabschnitts (27) in der Vertikalen gegenüber der Führungsschiene (6) verändern und an unterschiedliche Gegebenheiten anpassen lässt. Die Neigung der Gleitbahn für den Bügelhaken (20) kann hierdurch je nach Wunsch am Ende der Fingerspitze (12) steiler oder schwächer geneigt sein. Der Übergabefinger (10) besitzt auch in dieser Variante vorzugsweise ein prismatische Querschnittsform, welche seitliche Führungskanten (28,29) für den Bügelhaken (20) bildet.

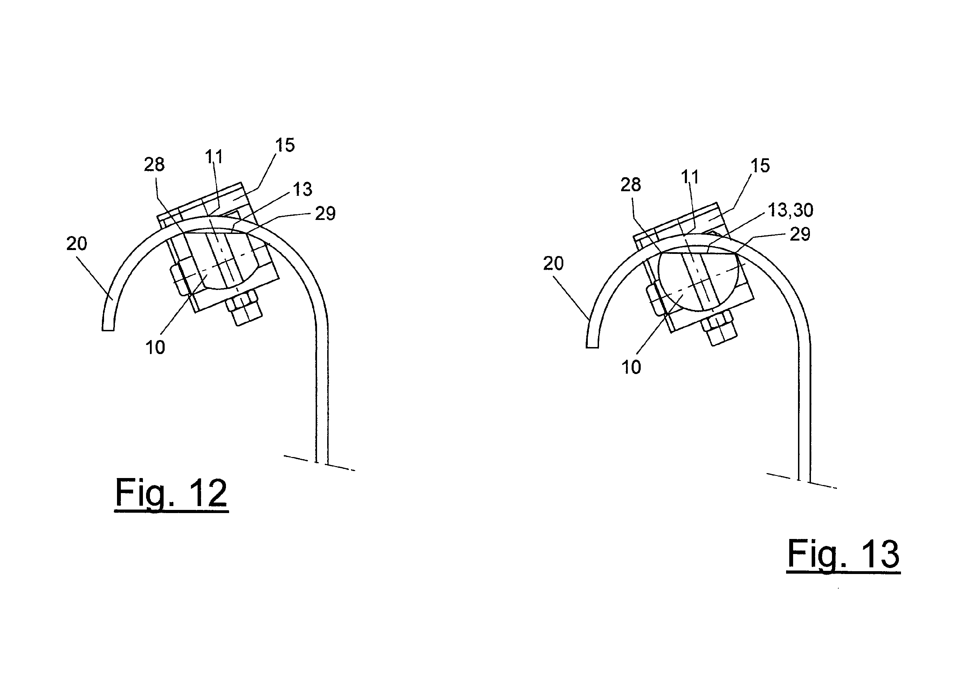

In Figur 12 und 13 sind Varianten in der Querschnittsgestaltung des Übergabefingers (10) dargestellt, wobei dieser in einer übergabegerechten Schräglage gezeigt ist. Beide Figuren verdeutlichen, wie der Übergabefinger (10) an seiner Oberseite und insbesondere die Anschrägung (13) mit den Längsrändern (28, 29) den Bügelhaken (20) führen. Durch die flache Anschrägung (13) und auch die anderen flachen Oberseiten des vorzugsweise prismatischen Fingerquerschnitts liegt der Bügelhaken (20) nur an den Längsrändern (28, 29) auf. Er ist hierdurch einerseits exakter in seiner Abwärtsbewegung geführt und kann sich andererseits durch die Auflage an zwei Punkten oder Linien nicht unerwünscht um die Hochachse verdrehen. Hierdurch ist sichergestellt, dass der Bügelhaken (20) auch mit der richtigen Orientierung auf den Förderer (9) übergeben werden kann und dort korrekt aufgleitet.

In der Variante von Figur 12 hat der Übergabefinger (10) keinen exakt prismatischen Querschnitt mit ebenen Seitenwänden, sondern besitzt zum Beispiel an der Unterseite eine ausgebauchte Wand.

In der Variante von Figur 13 hat der Übergabefinger (10) einen im Wesentlichen kreisrunden Querschnitt und besitzt an seiner Oberseite eine Abflachung (30), welche die Anschrägung (13) bildet.

In einer weiteren nicht dargestellten Abwandlung, kann ein prismatischer Fingerquerschnitt 3, 5 oder mehr Ecken oder Längskanten haben. Der Fingerquerschnitt ist in allen Fällen vorzugsweise kleiner als die Öffnungsweite des Bügelhakens (20), um diesen sicher aufnehmen und führen zu können. In weiterer Abwandlung der gezeigten Ausführungsformen muss die Fingeroberseite oder Abflachung (30) auch nicht in der gezeigten Weise als geneigte Anschrägung (13) ausgerichtet sein, sondern kann sich im rechten Winkel zur Drehachse (11) oder mit einer sonstigen beliebigen und führungsgeeigneten Neigung ausgerichtet sein.

Abwandlungen der gezeigten Ausführungsform sind in verschiedener Weise möglich. Zum einen kann der Übergabefinger (10) in anderer Weise beweglich gelagert sein und den Mitnehmern (7) ausweichen, indem er z.B. entlang seiner Längsachse vor und zurück fährt. Hierfür kann ein eigener motorischer Antrieb oder ein von den Mitnehmern (7) oder einem anderen Teil des Förderers betätigter bzw. abgeleiteter Antrieb vorhanden sein. Ferner kann der Übergabefinger (10) über ein z.B. um 90° gedrehtes Lager für die Ausweichbewegung auf und ab geschwenkt werden. Der Übergabefinger (10) kann auch in sich beweglich sein und ein oder mehrere integrierte Lager besitzen.

Variabel ist ferner die geometrische Form des Übergabefingers (10) und auch die konstruktive Ausgestaltung des Förderers (5) und der Zuführung (3). Der Übergabefinger (10) kann zudem über einen geeigneten Antrieb gesteuert oder elastisch in die Übergabeposition (14) bewegt werden. Dies kann z.B. eine Feder am Drehlager (11) oder ein motorischer Antrieb sein. Der motorische Antrieb ist dann wie die Vereinzelungsvorrichtung (19) auf den Fördertakt der Mitnehmer (7) eingestellt und entsprechend gesteuert. Die Steuerung kann in beiden Fällen über Lichtschranken oder andere die Mitnehmer (7) abtastende Sensoren am Förderer (5) oder über Positions- bzw. Weggeber am Antrieb des Förderers (5) oder auf andere beliebig geeignete Weise erfolgen.

### BEZUGSZEICHENLISTE

- 1: Übergabevorrichtung
- 2: Transportbügel
- 3: Zuführung, Zuführschiene
- 4: Gleitleiste
- 5: Förderer
- 6: Förderschiene
- 7: Mitnehmer
- 8: Förderachse, Bewegungsbahn Mitnehmer
- 9: Förderabschnitt
- 10: Übergabefinger
- 11: Drehlager
- 12: Fingerspitze, Keilform
- 13: Anschrägung
- 14: Übergabeposition
- 15: Lagerkopf
- 16: Aufnahmeschlitz
- 17: Anschlag
- 18: Gestell
- 19: Vereinzelungsvorrichtung
- 20: Bügelhaken
- 21: Bügelhals
- 22: Bügelarm
- 23: Wäschestück
- 24: Transportmittel, Förderkette
- 25: Krümmung einachsig
- 26: Krümmung mehrachsig
- 27: Endabschnitt
- 28: Führungskante, Randkante
- 29: Führungskante, Randkante
- 30: Abflachung

## Patentansprüche

1. Verfahren zur Übergabe von Transportbügeln (2) für Wäschestücke (23) von einer Zuführung (3) an Förderabschnitte (9) eines schienenartigen Förderers (5), welche zwischen mehreren im Abstand angeordneten Mitnehmern (7) gebildet werden, **dadurch gekennzeichnet, dass** die Transportbügel (2) mit einer räumlichen Neigung schräg von oben und von der Seite an den Förderer (5) übergeben werden.

2. Vorrichtung zur Übergabe von Transportbügeln (2) für Wäschestücke (23) von einer Zuführung (3) an Förderabschnitte (9) eines schienenartigen Förderers (5), welche zwischen mehreren im Abstand angeordneten Mitnehmern (7) gebildet sind, **dadurch gekennzeichnet, dass** am Ende der Zuführung (3) ein beweglicher Übergabefinger (10) angeordnet ist, der mit einer räumlichen Neigung schräg von oben und von der Seite zum Förderer (5) gerichtet ist und mit seiner Fingerspitze (12) ausweichfähig in die Bewegungsbahn (8) der Mitnehmer (7) ragt.

3. Übergabevorrichtung nach Anspruch 2, **dadurch gekennzeichnet, dass** der Übergabefinger (10) mit einem Drehlager (11) schwenkbar an der Zuführung (3) gelagert ist.

4. Übergabevorrichtung nach Anspruch 2 oder 3, **dadurch gekennzeichnet, dass** das Drehlager (11) mit seiner Achse schräg zum Förderer (5) ausgerichtet ist, wobei der Übergabefinger (10) durch Eigengewicht in seine Übergabeposition (14) am Förderer (5) kippt.

5. Übergabevorrichtung nach Anspruch 2, 3 oder 4, **dadurch gekennzeichnet, dass** die Zuführung (3) am Ende einen zylindrischen oder ovalen Lagerkopf (15) mit einem schrägen Aufnahmeschlitz (16) für den Übergabefinger (10) und das Drehlager (11) aufweist.

6. Übergabevorrichtung nach einem der Ansprüche 2 bis 5, **dadurch gekennzeichnet, dass** die Fingerspitze (12) sich in Übergabeposition (14) etwa in der Mitte des Förderers (5) befindet.

7. Übergabevorrichtung nach einem der Ansprüche 2 bis 6, **dadurch gekennzeichnet, dass** die Fingerspitze (12) sich in Übergabeposition (14) mit einem geringen Abstand über dem Förderer (5) befindet, welcher kleiner als die freie Höhe der Mitnehmer (7) ist.

8. Übergabevorrichtung nach einem der Ansprüche 2 bis 7, **dadurch gekennzeichnet, dass** der Übergabefinger (10) eine verjüngte Fingerspitze (12) aufweist.

9. Übergabevorrichtung nach einem der Ansprüche 2 bis 8, **dadurch gekennzeichnet,dass** der Übergabefinger (10) eine im wesentlichen gerade Erstreckungsform aufweist.

10. Übergabevorrichtung nach einem der Ansprüche 2 bis 8, **dadurch gekennzeichnet,dass** der Übergabefinger (10) eine gebogene Form mit einer ein- oder mehrachsigen Krümmung (25,26) der Fingerspitze (12) aufweist.

11. Übergabevorrichtung nach Anspruch 10, **dadurch gekennzeichnet,dass** die ein- oder mehrachsige Krümmung (25,26) des Übergabefingers (10) in Bewegungsrichtung der Mitnehmer (7) weist.

12. Übergabevorrichtung nach Anspruch 10 oder 11, **dadurch gekennzeichnet,dass** der Übergabefinger (10) im Anschluss an die ein- oder mehrachsige Krümmung (25,26) einen im wesentlichen geraden Endabschnitt (27) der Fingerspitze (12) besitzt.

13. Übergabevorrichtung nach Anspruch 10, 11 oder 12, **dadurch gekennzeichnet,dass** der Endabschnitt (27) der gekrümmten Fingerspitze in Übergabeposition (14) des Übergabefingers (10) sich im wesentlichen mittig über der Förderachse (8) der Mitnehmer (7) befindet und längs der Förderachse (8) ausgerichtet ist.

14. Übergabevorrichtung nach einem der Ansprüche 2 bis 13, **dadurch gekennzeichnet,dass** der Übergabefinger (10) an der Oberseite zwei mit Abstand nebeneinander längs laufende Führungskanten (28,29) für den Bügel aufweist.

15. Übergabevorrichtung nach Anspruch 14, **dadurch gekennzeichnet,dass** der Übergabefinger (10) einen vorzugsweise prismatischen Querschnitt besitzt und an der Oberseite eine Anschrägung (13) oder Abflachung (30) mit im wesentlichen parallelen Rändern aufweist.

16. Übergabevorrichtung nach einem der Ansprüche 2 bis 15, **dadurch gekennzeichnet,dass** die Anschrägung (13) oder Abflachung (30) eine dem Drehlager (11) entgegengesetzte Neigung aufweist.

17. Übergabevorrichtung nach einem der Ansprüche 2 bis 16, **dadurch gekennzeichnet,dass** der Übergabefinger (10) in Übergabeposition (14) einen seitlichen Anstellwinkel α von ca. 10° bis 35°, vorzugsweise 30° und einen Fallwinkel β (siehe Figur 2) von ca. 5° bis 25°, vorzugsweise 15° zum Förderer (5) aufweist.

18. Übergabevorrichtung nach einem der Ansprüche 2 bis 17, **dadurch gekennzeichnet,dass** die Zuführung (3) als Profilschiene ausgebildet ist und an der Oberseite ein oder zwei parallele Gleitleisten (4) aufweist.

19. Übergabevorrichtung nach einem der Ansprüche 2 bis 18, **dadurch gekennzeichnet,dass** an der Zuführung (3) eine an den Fördertakt der Mitnehmer (7) angepasste Vereinzelungsvorrichtung angeordnet ist.
